# EUROPÄISCHE PATENTSCHRIFT

(11) **EP 1 546 785 B1**
(45) Veröffentlichungstag und Bekanntmachung des Hinweises auf die Patenterteilung: **03.01.2007**
(21) Anmeldenummer: 03807765.7
(22) Anmeldetag: 30.07.2003
(51) Int. Cl.: G02B 6/42

(54) **SPEKTRAL BREITBANDIGE LICHTQUELLE HOHER LICHTLEISTUNG**
SPECTRAL BROADBAND AND A HIGH EFFICIENCY LIGHT SOURCE
SOURCE DE LUMIERE A LARGE BANDE SPECTRALE ET A HAUTE EFFICACITE LUMINEUSE

(30) Priorität: 30.09.2002 DE 10245526
(43) Veröffentlichungstag der Anmeldung: 29.06.2005
(73) Patentinhaber: LITEF GmbH, 79115 Freiburg (DE)
(72) Erfinder: KELLER, Manfred, 79359 Riegel (DE)
(74) Vertreter: Müller, Frithjof E.
(86) Internationale Anmeldenummer: PCT/EP2003/008441
(87) Internationale Veröffentlichungsnummer: WO 2004/034112

(56) Entgegenhaltungen:
- US-A- 5 369 661
- US-A1- 2001 012 047
- PATENT ABSTRACTS OF JAPAN vol. 1997, no. 09, 30. September 1997 (1997-09-30) & JP 09 127424 A (YOKOGAWA ELECTRIC CORP), 16. Mai 1997 (1997-05-16)

## Beschreibung

Die Erfindung betrifft eine Lichtquelle spektraler Breitbandigkeit mit hoher Lichtleistung für faseroptische Anwendungen, insbesondere für den Einsatz in faseroptischen Interferometern oder faseroptischen Gyroskopen (FOGs).

Bisher werden in faseroptischen Sensoren, insbesondere in FOGs, Superlumineszenz-Dioden als Lichtquelle verwendet, um die beiden zentralen Anforderungen von spektraler Breitbandigkeit einerseits und ausreichender in die Faser einzukoppelnder Lichtleistung andererseits zu garantieren. Solche Lichtquellen sind Spezialbauteile, die aufgrund ihrer geringen Stückzahl vergleichsweise sehr teuer sind. Handelsübliche, billige Alternativen wären lichtemittierende Dioden (LEDs) oder Laserdioden (LDs). LEDs erfüllen das Leistungskriterium nicht, LDs andererseits weisen nicht die zu fordernden spektralen Eigenschaften auf.

Der Erfindung liegt damit die Aufgabe zugrunde, eine spektral breitbandige Lichtquelle hoher Lichtleistung für faseroptische Anwendungen zur Verfügung zu stellen, die sich in einem wirtschaftlichen automatischen Massenherstellungsprozess und damit in großen Stückzahlen preisgünstig herstellen lässt.

Eine spektral breitbandige Lichtquelle mit vergleichsweise hoher Lichtleistung für faseroptische Anwendungen, insbesondere für faseroptische Sensoren, ist erfindungsgemäß gekennzeichnet durch ein auf einem Substrat, insbesondere einem Wafer oder Chip angeordnetes monolithisches Linear-Array von benachbarten oberffächenemittierenden LEDs, eine vor dem monolithischen LED-Linear-Array auf der Abstrahlseite in vorgegebenem Abstand angeordnete Mikrooptik mit den LED-Elementen individuell zugeordneten optischen Funktionen derart, dass die Abstrahlung der einzelnen LEDs auf eine zur Optimierung der in eine optische Faser einkoppelbaren Lichtleistung auf eine vor der Einkoppelstelle der Faser angeordnete Optik-Einheit gebündelt wird.

Vorzugsweise ist die Optik-Einheit als eine an einem Lichteinstrahlende der Faser angeordnete Kugellinse ausgebildet.

Außer für faseroptische Sensoren eignet sich die Erfindung auch vorteilhaft für bestimmte Anwendungen in der Messtechnik, insbesondere in der Telekommunikation, d. h. überall dort, wo eine spektrale Breitbandigkeit benötigt wird, z. B. bei der Vermessung/Einmessung von WDM- oder DWDM-Systemen.

Der Erfindungsgedanke besteht also in der geeigneten Kombination von mehreren grundsätzlich zur Verfügung stehenden Techniken und Elementen, nämlich
- leistungsstarken LEDs,
- präzisen Mikrooptiken zur Strahlbündelung der von den einzelnen LEDs abgegebenen Lichter, und
- einer geeigneten weiteren Optik zur optimierten Einkoppelung der gebündelten Lichtleistung in eine optische Faser.

Die eigentliche Lichtquelle ist ein Array, vorzugsweise ein Linsen-Array in Kombination mit leistungsstarken, oberflächenemittierenden LEDs. Mit diesen lässt sich das Kriterium der spektralen Breitbandigkeit erfüllen. Solche LEDs können auf dem gemeinsamen Wafer komplett getestet werden. Das Array besteht aus in geringem Abstand benachbarten LEDs auf dem Wafer, deren jeweilige Anzahl durch die nachfolgenden optischen Einheiten zur Strahlablenkung und Fokussierung sowie durch die erforderliche Lichtleistung bestimmt wird.

Auf dem monolithischen LED-Array wird eine spezielle Mikrooptik angebracht. Diese besteht aus einem Array einzelner optischer Funktionen, um die mehr oder weniger räumliche Abstrahlung der einzelnen LEDs auf dem Chip in eine jeweils parallele Abstrahlung zu bündeln. Durch diese Summierung der individuellen Lichtleistungen der einzelnen LEDs wird das Kriterium der erwünschten hohen Lichtleistung erfüllt. Durch die Verwendung neuester Verfahren aus den Bereichen der Mikrooptik erreicht man komplexe optische Funktionalität bei gleichzeitig sehr guter Anpassung an das LED-Array. Die Bündelung erfolgt dabei sehr präzise in Anpassung auf die einzelnen LEDs des Arrays und wird gegebenenfalls für jede dieser LEDs des Arrays hinsichtlich der Abstrahlrichtung optimiert. Diese Anforderungen lassen sich mit einer Mikrooptik sehr gut, nämlich monolithisch in einem einzigen Modul realisieren. Eine weitere Optikeinheit, z. B. eine auf der Faser stirnseitig angebrachte Kugellinse dient zur Strahlbündelung und zur Optimierung der Einkopplung in die Faser.

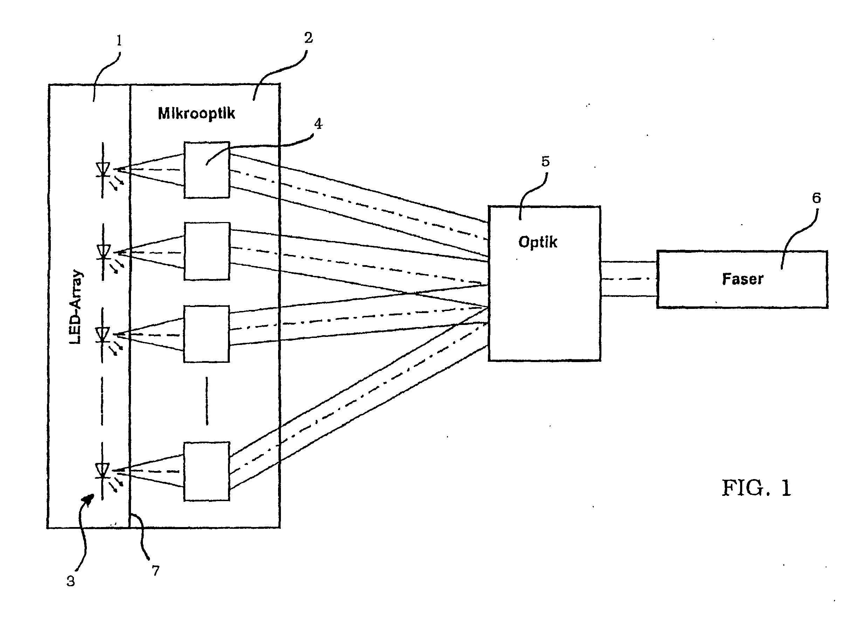

Ein Ausführungsbeispiel der Erfindung wird nachfolgend unter Bezug auf die Zeichnung der **Fig. 1** (einzige Figur) in Einzelheiten erläutert.

Auf einem Substrat 1, insbesondere einem geeigneten Wafer oder Chip-Substrat ist entlang einer Bezuglinie oder Kante 7 ein Linear-Array von vorzugsweise gleich beabstandeten leistungsstarken und oberflächenemittierenden LEDs ausgebildet, die alle unmittelbar auf dem Wafer mit bekannten Testverfahren komplett getestet werden können. In Abstrahlrichtung der LEDs 3 befindet sich in einem geringen Abstand ein Linsen-Array 4 einer Mikrooptik, deren einzelne Elemente 4 jeweils auf eine der LEDs 3 ausgerichtet sind. Die Optikelemente des Linsen-Arrays 4 ihrerseits sind so gestaltet und ausgerichtet, dass die Lichtstrahlen der einzelnen LED-Elemente 3 auf eine Sammeloptik 5 fokussiert werden, die vorzugsweise eine vor oder auf einer optischen Faser 6 angeordnete Sammeloptik 5, beispielsweise eine Kugellinse ist.

Mit der Erfindung werden folgende wesentliche Vorteile erreicht:
1. Wesentliche Bearbeitungs- und Testschritte können als Batch-Processing durchgeführt werden. Dies führt zu deutlich geringeren Herstellungskosten, insbesondere bei der Chip-Herstellung und im Vergleich zu den Herstellungskosten für eine einzelne Superlumineszenzdiode mit vergleichbaren Eigenschaften.
2. Die Herstellung des Chips mit dem LED-Linear-Array und dem Linsen-Array erfolgt mit bekannten Prozessen einer Massenfertigung.
3. Die Chips können vergleichsweise einfach an den jeweils aktuellen Stand der Technik angepasst werden, um ein Wachstumspotential dieser neuen Technik einfach zu nutzen, die im Prinzip von einer Mehrzahl von Chip-Herstellern heute beherrscht wird.

## Patentansprüche

1. Spektral breitbandige Lichtquelle hoher Lichtleistung für faseroptische Anwendungen, mit
- einem auf einem Substrat, insbesondere einem Wafer oder Chip angeordneten Linear-Array von benachbarten oberflächenemittierenden LEDs (3);
- einem vor dem LED-Linear-Array auf der Abstrahlseite in vorgegebenem Abstand angeordneten Mikrooptik-Array (4) mit den LED-Elementen individuell zugeordneten optischen Funktionen derart, dass die Abstrahlung der einzelnen LEDs auf eine zur Optimierung der in eine optische Faser (6) einkoppelbaren Lichtleistung dienenden Optik-Einheit (5) gebündelt wird, die vor der Einkoppelstelle der Faser angeordnet ist,
**dadurch gekennzeichnet,**
**dass** das Linear-Array eine monolithische Einheit bildet und die einzelnen Elemente des Mikrooptik-Arrays (4) so angeordnet bzw. ausgestaltet sind, dass die durch die Elemente abgestrahlten, auf die Optik-Einheit zulaufenden Lichtstrahlen hinsichtlich der Längsachse der Faser unterschiedliche Neigungswinkel aufweisen.

2. Spektral breitbandige Lichtquelle nach Anspruch 1, **dadurch gekenzeichnet**, dass die Optik-Einheit (5) als eine an einem Lichteinstrahlende der Faser (6) angeordnete Sammeloptik, insbesondere als Kugellinse ausgebildet ist.

## Claims

1. A spectrally broadband light source of high optical power for fiber optic applications, having
- a linear array, arranged on a substrate, in particular a wafer or chip, of adjacent surface-emitting LEDs (3); and
- a microoptics array (4), arranged upstream of the LED linear array on the emission side at a prescribed spacing, having optical functions individually assigned to the LED elements in such a way that the emission of the individual LEDs is focused onto an optical unit (5) which serves to optimize the light power that can be launched into an optical fiber (6), and which is arranged upstream of the launch point of the fiber, **characterized in that** the linear array forms a monolithic unit, and the individual elements of the microoptics array (4) are arranged or fashioned such that the light beams emitted by the elements and traveling to the optics unit have different angles of inclination with regard to the longitudinal axis of the fiber.

2. A spectrally broadband light source as claimed in claim 1, **characterized in that** the optical unit (5) is designed as a collecting optics, in particular as a spherical lens, arranged at an end of the fiber (6) into which light is radiated.

## Revendications

1. Source de lumière à large bande spectrale et à haute efficacité lumineuse pour des utilisations par fibre optique, comportant
- un réseau linéaire de LED adjacentes émettant superficiellement (3) disposé sur un substrat, en particulier une tranche ou une puce ;
- un réseau micro optique (4) disposé à une distance prédéterminée du réseau linéaire de LED sur le côté de rayonnement comportant des fonctions optiques associées individuellement avec les éléments LED de sorte que le rayonnement des différentes LED est lié à une unité optique (5) utilisée pour l'optimisation de l'efficacité lumineuse pouvant être couplée dans une fibre optique (6), qui est disposée avant l'endroit de couplage de la fibre,
**caractérisée en ce que** le réseau linéaire forme une unité monolithique et les différents éléments du réseau micro optique (4) sont disposés ou agencés de sorte que les rayons lumineux rayonnés par les éléments et dirigés vers l'unité optique présentent des angles d'inclinaison différents par rapport à l'axe longitudinal de la fibre.

2. Source de lumière à large bande spectrale selon la revendication 1, **caractérisée en ce que** l'unité optique (5) est réalisée sous la forme d'une optique collectrice disposée à une extrémité de rayonnement lumineux de la fibre (6), en particulier sous la forme d'une lentille sphérique.
